Europäisches Patentamt

(19) European Patent Office

Office européen des brevets

(11) Numéro de publication : **0 438 327 A1**

(12) # DEMANDE DE BREVET EUROPEEN

(21) Numéro de dépôt : 91400023.7

(22) Date de dépôt : 08.01.91

(51) Int. Cl.⁵ : **A47J 36/26, B65D 83/74, A47J 33/00**

(30) Priorité : 11.01.90 FR 90000260

(43) Date de publication de la demande :
24.07.91 Bulletin 91/30

(84) Etats contractants désignés :
BE DE ES IT

(71) Demandeur : **Le Moigne, Yves**
**38, Rue du Rouillon**
**F-91160 Ballainvilliers (FR)**
Demandeur : **Trauttmann, Luc**
**55, rue des Pierres Rangées**
**F-91590 La Ferte Alais (FR)**

(72) Inventeur : **Le Moigne, Yves**
**38, Rue du Rouillon**
**F-91160 Ballainvilliers (FR)**
Inventeur : **Trauttmann, Luc**
**55, rue des Pierres Rangées**
**F-91590 La Ferte Alais (FR)**

(74) Mandataire : **Tony-Durand, Serge et al**
**Cabinet Tony-Durand 77, rue Boissière**
**F-75116 Paris (FR)**

(54) **Réchaud de campagne, conçu pour être à la fois réglable et jetable après usage.**

(57) Le corps de ce réchaud est constitué par une plaque en tôle (1) comportant une partie centrale (2) de contour carré ou rectangulaire destinée à constituer le fond du réchaud et à recevoir une pastille (P) de combustible. Autour de cette partie centrale, il est prévu des fentes ou découpes (3) délimitant quatre volets distincts (4, 5), reliés à cette partie centrale (2) le long des quatre côtés de celle-ci. Ces volets peuvent être redressés en position d'utilisation, par pliage à l'endroit de ces quatre côtés. Ainsi deux volets, situés l'un en face de l'autre, sont alors aptes à constituer deux côtés (4) au corps du réchaud pour servir de supports au récipient (R) à chauffer, cependant que les autres volets (5) forment des écrans de protection pouvant être plus ou moins relevés pour régler les conditions de tirage de ce réchaud.
Ce réchaud est susceptible d'être jeté après usage.

EP 0 438 327 A1

FIG. 2

## RECHAUD DE CAMPAGNE, CONCU POUR ETRE A LA FOIS REGLABLE ET JETABLE APRES USAGE

La présente invention concerne les réchauds de campagne destinés à être utilisés pour chauffer rapidement une ration alimentaire contenue dans une boîte de conserve ou similaire.

Il existe déjà quelques modèles de réchauds conçus pour une telle application. Cependant ceux-ci ne donnent pas entière satisfaction. L'un de ces modèles, destiné plus particulièrement aux soldats en campagne, consiste en une sorte de coupelle en métal embouti qui est emboîtée sur le fond du récipient, pouvant être utilisé également comme gobelet pour boire. La coupelle ainsi prévue est destinée à être détachée du récipient correspondant pour pouvoir y placer une pastille de combustible, par exemple l'alcool solidifié ou similaire, le récipient à chauffer étant ensuite posé sur cette coupelle. En raison de la conception de ce réchaud, le prix de revient de celui-ci est loin d'être négligeable. Il s'agit donc d'un équipement destiné à être conservé pour être ré-utilisé autant de fois que nécessaire. Toutefois ce réchaud est très rapidement encrassé du fait des opérations répétées d'utilisation. Par ailleurs ce réchaud est peu pratique et il est matériellement impossible de régler le fonctionnement de celui-ci pour tenir compte de conditions différentes d'utilisation pouvant influer fortement sur ce fonctionnement. Ainsi il est bien évident qu'en plein air il conviendrait de limiter les entrées d'air pour que la flamme puisse se propager convenablement alors qu'au contraire, lors d'une utilisation à l'intérieur d'un local ou dans un endroit abrité, il faudrait pouvoir accroître l'importance des passages d'entrée d'air pour faciliter le tirage du réchaud.

Un autre type de réchaud de campagne est constitué simplement par deux barrettes en métal, qui, grâce à des encoches complémentaires, peuvent être assemblées en croix pour constituer un support susceptible d'être posé sur le sol pour supporter le récipient à chauffer, un espace étant ménagé au centre pour y poser une pastille de combustible. Un tel réchaud a l'avantage de pouvoir être transporté sous un très faible encombrement, puisque les deux barrettes peuvent alors être placées à plat l'une contre l'autre. Il a également l'avantage de présenter un très faible prix de revient, de sorte qu'il peut être considéré comme un article jetable après emploi. Par contre ce réchaud a de nouveau l'inconvénient que ses conditions de fonctionnement ne peuvent pas être réglées en fonction des circonstances d'emploi. Du reste le fonctionnement de ce réchaud en plein air est très mauvais, et même quelquefois impossible, car il n'existe pratiquement aucune protection de la flamme contre les courants d'air.

C'est pourquoi la présente invention a pour but de réaliser un réchaud de campagne qui soit à la fois susceptible de permettre le réglage de ses conditions de fonctionnement, et néanmoins de très faible prix, pour pouvoir constituer un article jetable après emploi. Ce réchaud est également conçu pour présenter un encombrement négligeable lors de son transport.

A cet effet ce réchaud est caractérisé en ce que le corps de celui-ci est constitué par une plaque en tôle comportant :

– autour d'une partie centrale de contour carré ou rectangulaire destinée à constituer le fond de ce réchaud et à recevoir une pastille de combustible,

– des fentes ou découpes délimitant quatre volets distincts, reliés à cette partie centrale le long des quatre côtés de celle-ci, et pouvant être redressés en position d'utilisation, par pliage à l'endroit de ces quatre côtés,

– deux volets, situés l'un en face de l'autre étant alors aptes à constituer deux côtés du corps du réchaud pour servir de supports au récipient à chauffer,

– cependant que les autres volets forment des écrans de protection pouvant être plus ou moins relevés pour régler les conditions de tirage de ce réchaud.

Ainsi, malgré la très grande simplicité de sa structure, ce réchaud est néanmoins réglable. Cependant son très faible prix de revient permet de le traiter comme un article jetable après une seule utilisation, ce qui est un avantage appréciable dans le cas des applications prévues pour un tel réchaud.

Cependant d'autres avantages et particularités de ce réchaud apparaîtront au cours de la description suivante d'un exemple de réalisation de celui-ci. Cet exemple est représenté sur les dessins annexés sur lesquels :

La figure 1 est une vue en plan de dessus de la plaque métallique constituant le corps du présent réchaud, celle-ci étant représentée avant relèvement des volets prévus dans cette plaque.

La figure 2 est une vue en perspective illustrant le mode d'utilisation du présent réchaud.

La figure 3 est une vue en élévation de côté représentant le mode d'utilisation du présent réchaud en plein air.

La figure 4 est une vue correspondante en coupe selon la ligne IV-IV de la figure 3.

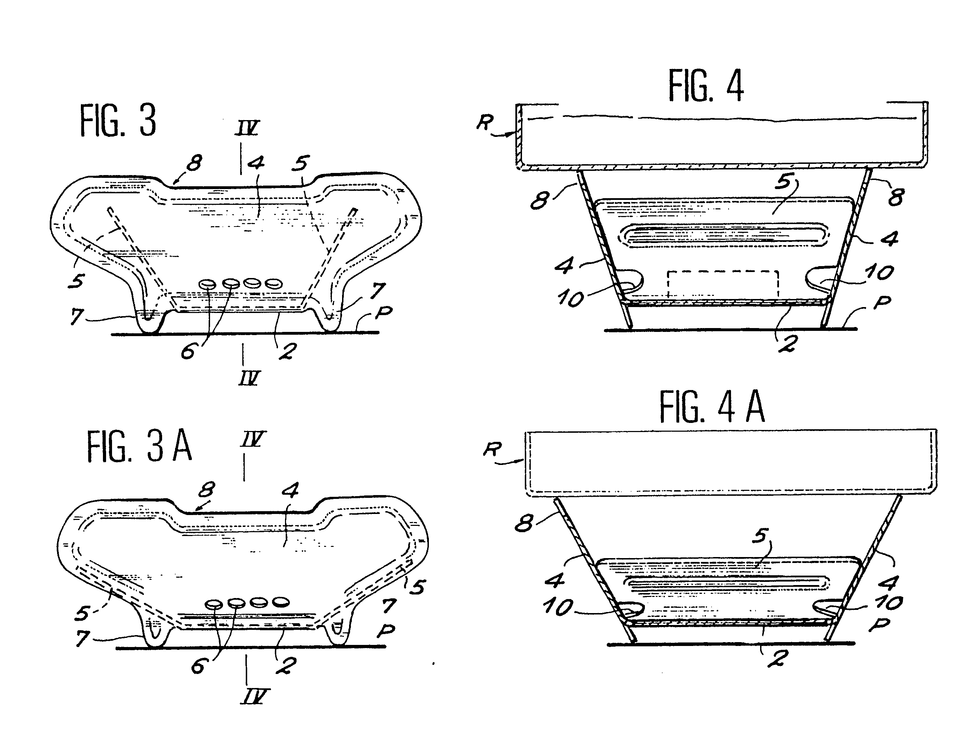

La figure 3A est une vue similaire à la figure 3 mais qui illustre l'utilisation du présent réchaud à l'intérieur d'un local.

La figure 4A est une vue en coupe selon la ligne IV-IV de la figure 3A.

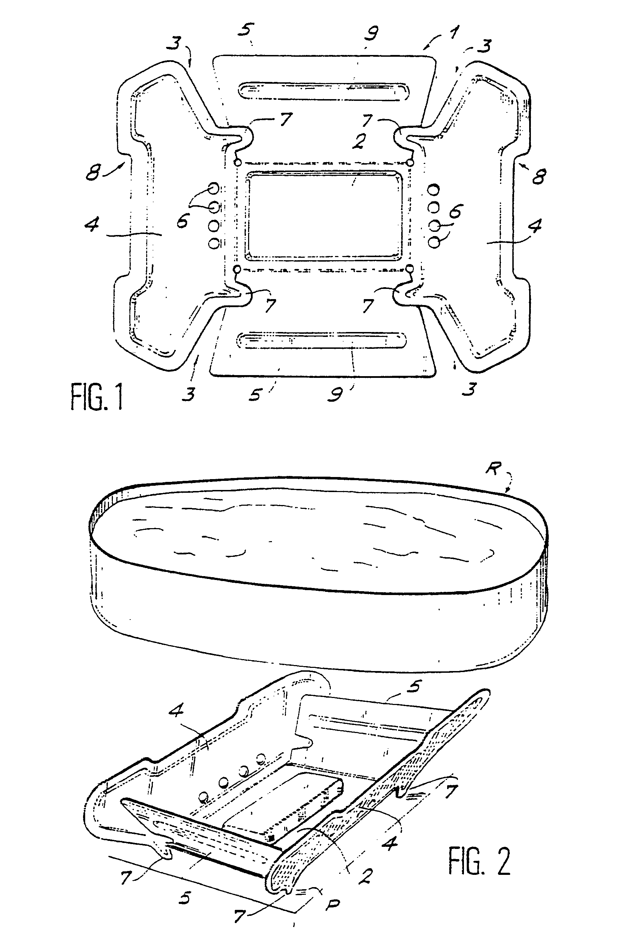

Le corps du présent réchaud est constitué par une plaque plate en tôle, de préférence en tôle d'acier électrozinguée, pouvant avoir une épaisseur de l'ordre de 0,4 mm par exemple. Cette plaque qui est désignée par la référence générale 1 sur la figure 1, comporte une partie centrale 2, de contour carré ou rectangulaire, qui est destinée à constituer le fond du réchaud et à servir de support à une pastille P de combustible.

Autour de cette partie centrale il est prévu quatre fentes ou découpes 3 dont chacune part de l'un des coins de cette partie centrale pour aboutir à la périphérie de la plaque 1. Ces quatre découpes délimitent ainsi quatre volets distincts auxquels sont assignées des fonctions différentes. Ces volets sont destinés à être redressés en position d'utilisation par rapport à la partie centrale 2 constituant le fond du réchaud, afin de former avec celui-ci la chambre de combustion du réchaud. Les volets relevés constituent alors une barrière de protection autour du foyer de combustion constitué par le fond 2 du réchaud.

L'agencement prévu permet de réaliser le redressement des volets relevables par pliage de la plaque 1 selon des lignes de pliage correspondant aux différents côtés de la partie centrale 2. A cet effet il peut du reste être avantageusement prévu, à chacun de ces endroits, une ligne continue d'emboutie ou une ligne discontinue de points emboutis ou similaires, facilitant le pliage de la tôle.

Deux des volets relevables, en l'occurrence les deux volets 4 situés l'un en regard de l'autre, sont destinés à constituer les côtés du corps du réchaud pour servir de supports au récipient R dont le contenu doit être chauffé. Quant aux deux autres volets relevables 5, ils sont destinés à servir d'écrans de protection pouvant être plus ou moins relevés pour constituer des déflecteurs permettant de régler les conditions de tirage à l'intérieur de la chambre de combustion formée par le relèvement des différents volets 4 et 5. Les modalités d'un tel réglage sont du reste décrites plus en détail par la suite.

A leur base, les deux volets 4 présentent une série de trous 6 d'entrée d'air. De plus ils comportent, toujours à leur base, deux extensions 7 qui sont découpées dans les bords adjacents des deux autres volets 5 (voir figure 1). L'agencement est tel que lors du relèvement des différents volets 4 et 5, ces extensions 7 font saillie en sens inverse et peuvent ainsi constituer des pieds d'appui contre le sol ou tout autre support approprié (voir figure 3 et 3A). L'existence de ces pieds permet donc d'assurer un certain écartement du fond du réchaud par rapport au sol ou au support de celui-ci, en réalisant ainsi les conditions voulues de sécurité contre le risque d'échauffement dangereux du support du réchaud.

Par ailleurs sur leur bord supérieur les volets 4 présentent, dans leur partie médiane, une découpe 8 en retrait. Lorsque ces volets sont redressés et qu'ils constituent les supports d'un récipient R à chauffer, l'existence de ces découpes détermine un intervalle libre permettant un plus grand étalement de la flamme produite par le combustible.

Enfin, il convient de noter que les différents volets 4 et 5, ainsi que la partie centrale 2, présentent des emboutis de raidissement qui sont agencés de manière à éviter tout risque de pliage intempestif de la plaque 1 en dehors des lignes prévues de pliage. Dans le cas de la partie centrale 2, l'embouti prévu peut consister en une plage en creux de grande surface (partie foncée sur le dessin) pouvant du reste servir de logement pour la pastille de combustible P. Dans le cas des deux volets 5 servant de déflecteurs, les emboutis prévus peuvent consister en deux nervures 9 faisant saillie vers l'extérieur. Enfin dans le cas des volets 4, ces emboutis peuvent à nouveau consister en des plages de grande surface assurant le raidissement de chacun de ces volets.

Le présent réchaud est destiné à être transporté sous sa forme plate représentée à la figure 1. Ainsi il présente un encombrement pratiquement négligeable. Bien entendu son poids est également négligeable.

Pour utiliser ce réchaud il suffit de redresser les quatre volets 4 et 5 comme décrit précédemment, c'est-à-dire par pliage de la plaque 1 le long des quatre côtés de la partie centrale 2. Lors de cette opération, les extensions 7 forment des pieds saillants pouvant être posés sur le sol ou tout autre support. Quant aux deux volets 4, ils sont alors aptes à servir de supports au récipient R dont le contenu doit être chauffé. A cet effet il suffit de poser ce récipient sur le bord supérieur de ces deux volets.

Cependant, malgré sa très grande simplicité, le présent réchaud peut être réglé en fonction des conditions d'utilisation. A cet effet, les deux volets 5 sont conçus pour être relevés plus ou moins suivant le cas.

Ainsi, lorsque ce réchaud est utilisé en plein air, ces volets doivent être placés dans leur position de relèvement maximum, c'est-à-dire à 60° du fond 2 de réchaud, comme représenté sur les figures 3 et 4. Ainsi ces volets constituent une barrière de protection maximum de la flamme développée par la pastille de combustible P. Le tirage est alors assuré à travers les trous 6 ainsi qu'à travers les encoches 10 existant sur les bords des volets 5 et qui résultent de la découpe des pieds 7 portés par les volets 4.

Quant le présent réchaud est utilisé à l'intérieur d'un local, il est alors nécessaire de faciliter l'entrée d'air à l'intérieur de la chambre de combustion de celui-ci. A cet effet, les volets 5 formant déflecteurs doivent être placés dans une position plus ouverte, en l'occurrence dans leur position de plus faible relèvement à 30° par rapport au fond 2 du réchaud. Ceci est le cas illustré sur les figures 3A et 4A.

Ainsi le présent réchaud peut être utilisé aussi bien en plein air que dans un local fermé. Bien entendu les conditions exactes de tirage peuvent être réglées par un relèvement plus ou moins prononcé des déflecteurs 5 par rapport aux deux positions extrêmes représentées respectivement sur la figure 3 et la figure 3A.

Un autre avantage de ce réchaud réside dans le fait que la conception de celui-ci assure de parfaites conditions de sécurité lors de son fonctionnement. En effet, les pieds 7 réalisent l'écartement du foyer de ce réchaud par rapport au support sur lequel il est posé. Par ailleurs, les volets 4 et 5 forment, autour de la flamme, une barrière de protection évitant tout risque de propagation de celle-ci vers l'extérieur.

Compte tenu de la conception du présent réchaud, le prix de revient de celui-ci est extrêmement faible. En conséquence ce réchaud constitue un article destiné à être jeté après utilisation.

En raison de ses avantages, le présent réchaud peut être utilisé avec profit, non seulement par des soldats ou des randonneurs pédestres pour le chauffage d'une ration alimentaire, mais également dans de nombreux autres cas ou il y a lieu de réchauffer, ou de maintenir au chaud, des aliments ou produits similaires.

## Revendications

1. Réchaud pour le chauffage d'un récipient au moyen d'une pastille de combustible ou similaire, caractérisé en ce que le corps de celui-ci est constitué par une plaque en tôle (1) comportant :
   - autour d'une partie centrale (2) de contour carré ou rectangulaire destinée à constituer le fond de ce réchaud et à recevoir une pastille (P) de combustible,
   - des fentes ou découpes (3) délimitant quatre volets distincts (4, 5), reliés à cette partie centrale (2) le long des quatre côtés de celle-ci, et pouvant être redressés en position d'utilisation, par pliage à l'endroit de ces quatre côtés,
   - deux volets, situés l'un en face de l'autre étant alors aptes à constituer deux côtés (4) au corps du réchaud pour servir de supports au récipient (R) à chauffer,
   - cependant que les autres volets (5) forment des écrans de protection pouvant être plus ou moins relevés pour régler les conditions de tirage de ce réchaud.

2. Réchaud selon la revendication 1, caractérisé en ce qu'à leur base certains au moins des volets relevables (4,5) comportent des trous (6) d'entrée d'air.

3. Réchaud selon la revendication 1 ou 2, caractérisé en ce qu'à leur base deux volets opposés (4) présentent, de part et d'autre de la partie centrale (2), deux extensions (7) découpées dans les bords voisins des deux autres volets (5), ces extensions étant aptes à constituer des pieds d'appui au sol, ou contre tout autre support, lorsque ce réchaud est en position d'utilisation.

4. Réchaud selon l'une des revendications précédentes, caractérisé en ce que le bord supérieur des deux volets (4), qui sont destinés à servir de supports au récipient (R) à chauffer, présente une découpe (8) en retrait permettant un plus grand étalement de la flamme produite par le combustible.

5. Réchaud selon l'une des revendications précédentes, caractérisé en ce que les volets relevables (4,5), et la partie centrale (2), comportent des emboutis de raidissement agencés de manière à éviter tout risque de pliage intempestif de la plaque (1) de métal en dehors des lignes prévues de pliage le long des côtés de la partie centrale.

FIG. 1

FIG. 2

FIG. 4

FIG. 4 A

FIG. 3

FIG. 3 A

Office européen
des brevets

**RAPPORT DE RECHERCHE EUROPEENNE**

Numero de la demande

EP 91 40 0023

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | FR-A-346 748 (FLAMBEAU ET AL) <br> * le document en entier * | 1,4 | A47J36/26 <br> B65D83/74 <br> A47J33/00 |
| Y | | 2,3,5 | |
| Y | DE-A-3 538 243 (SCHUMM GMBH) <br> * colonne 5, ligne 63 – colonne 6, ligne 3; figures * | 2,3 | |
| Y | DE-U-8 631 058 (REINHOLD MACK GMBH & CO) <br> * page 8, ligne 14 – page 9, ligne 1; figures * | 5 | |
| A | US-A-3 841 298 (SELLORS) <br> * colonne 2, ligne 58 – colonne 5, ligne 18; figures * | 1-4 | |
| A | DE-A-3 534 164 (SCHUMM GMBH) <br> * colonne 4, ligne 15 – colonne 5, ligne 38; figures 1-4 * | 1,3,5 | |

**DOMAINES TECHNIQUES RECHERCHES (Int. Cl.5)**

A47J
F24C

Le présent rapport a été établi pour toutes les revendications

| Lieu de la recherche | Date d'achèvement de la recherche | Examinateur |
|---|---|---|
| LA HAYE | 24 AVRIL 1991 | BODART P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)